# EUROPÄISCHE PATENTANMELDUNG

(11) **EP 2 769 909 A2**
(43) Veröffentlichungstag der Anmeldung: **27.08.2014**
(21) Anmeldenummer: 14000672.7
(22) Anmeldetag: 26.02.2014
(51) Int. Cl.: B63B 1/04, B63B 1/06

(54) **Rumpfform und Rumpf eines Wasserfahrzeuges sowie Wasserfahrzeug mit einem Rumpf**

(30) Priorität: 26.02.2013 DE 202013001842 U; 18.07.2013 DE 102013012006
(71) Anmelder: Moskvin, Dimitri, 31139 Hildesheim (DE)
(72) Erfinder: Moskvin, Dimitri, 31139 Hildesheim (DE)

(57) **Zusammenfassung**

Die Erfindung betrifft eine Rumpfform eines Wasserfahrzeuges dadurch gekennzeichnet dass Rumpf am Bug visuell aus 3 Elementen besteht:
- aus dem Schwebenden Bug (1) (weil der Bug im verdrängten Zustand sich über der Wasserlinie befindet),
- aus dem extrem schmalen Steven (2) unter dem Schwebenden Bug,
- aus dem Verdrängungskörper (3), der sich unter der Wasserlinie befindet und dem Bug entsprechenden Auftrieb verleiht.

Die Erfindung betrifft außerdem einen Rumpf eines Wasserfahrzeuges sowie ein Wasserfahrzeug mit einem solchen Rumpf.

## Beschreibung

Die Erfindung betrifft eine Rumpfform eines Wasserfahrzeuges nach Anspruch 1. Die Erfindung betrifft außerdem einen Rumpf eines Wasserfahrzeuges nach Anspruch 5 sowie ein Wasserfahrzeug mit einem solchen Rumpf gemäß Anspruch 13.

Bisherige Wasserfahrzeuge sind aufgrund ihrer Rumpfformen in verschiedener Hinsicht verbesserungsbedürftig, z.B. im Hinblick auf erreichbare Fahrgeschwindigkeit im Wasser, Energieeffizienz und Fahrkomfort. Der Erfindung liegt daher die Aufgabe zugrunde, eine verbesserte Rumpfform, einen Rumpf und einen entsprechendes Wasserfahrzeug anzugeben.

Diese Aufgabe wird durch die in den Ansprüchen angegebene Erfindung gelöst. Die Unteransprüche sowie die nachfolgende Beschreibung geben vorteilhafte Weiterbildungen der Erfindung an.

Die Erfindung wird anhand von Ausführungsbeispielen unter Verwendung von Zeichnungen erläutert. In den Zeichnungen wird jeweils links oben ein erfindungsgemäßer Rumpf in Seitenansicht (Backbordseite) dargestellt, rechts oben ist eine Heckansicht dargestellt und unten eine Ansicht des Rumpfs in einer Schnittansicht von oben, wobei die Schnittebene entsprechend der Wasserlinie 9 verläuft. Als Wasserlinie 9 wird diejenige Ebene des Rumpfs verstanden, bis zu der der Rumpf ins Wasser eintaucht, wenn er seine spezifikationsgemäße Normalbeladung aufweist und das Wasser sich nicht bewegt. Der Rumpf des Wasserfahrzeuges weist eine Längsachse auf, die sich in Längsrichtung des Rumpfs erstreckt, d.h. vom Heck zum Bug, also in den Zeichnungen in der unteren Darstellung z.B. eine waagerechte Linie parallel zur Wasseroberfläche. Der Rumpf weist eine Hochachse auf, die sich senkrecht zur Längsachse erstreckt bei ebener waagerechter Lage des Rumpfs in ruhigem Wasser vertikal verläuft. Bei einem Segelschiff verläuft der Mast in der Regel parallel zur Hochachse. Ferner weist der Rumpf eine Querachse auf, die sich senkrecht zur Längs- und zur Hochachse erstreckt.

Als Längsrichtung des Rumpfs wird dementsprechend seine Erstreckung entlang der Längsachse verstanden, als Querrichtung seine Erstreckung entlang der Querachse.

Der Auftriebskörper, der insbesondere als der nachfolgend noch erläuterte Verdrängungskörper ausgebildet sein kann, kann zur Erzeugung eines statischen und/oder eines dynamischen Auftriebs ausgebildet sein. Zur Erzeugung eines statischen Auftriebs weist der Auftriebskörper Auftriebsmittel auf, durch die er einen Auftrieb erzeugen kann, auch wenn der Rumpf sich nicht durch das Wasser bewegt. Der Auftriebskörper kann zusätzlich oder alternativ zur Erzeugung eines dynamischen Auftriebs ausgebildet sein. Hierzu kann der Auftriebskörper mit einem bestimmten Profil ausgebildet sein, dass in den Zeichnungen abgebildeten Seitenansichten des Rumpfes erkennbar ist. Das Profil kann vergleichbar zu einem Tragflächenprofil eines Flugzeugs oder eines sonstigen Strömungskörpers, insbesondere der Rumpfform eines Wassertiers, z.B. eines Hais, ausgebildet sein. Bei einem zu einem Tragflächenprofil analog ausgebildeten Profil des Auftriebskörpers können sowohl Profile mit veränderlichem Druckpunkt als auch druckpunktstabile Profile, z.B. S-Schlag-Profile oder sonstige für Nurflügel-Flugzeuge, hierfür geeignete Profile sein.

Der Rumpf kann einen extrem schmalen Vordersteven aufweisen, der den Bug mit dem Auftriebskörper verbindet. Als Bug in diesem Sinne gilt derjenige vordere Bereich des Rumpfs, der einen Volumenkörper bildet, der im Falle des bei der erfindungsgemäßen Rumpfform an sich nicht beabsichtigten Eintauchens in das Wasser einen Auftrieb erzeugt. Der extrem schmale Vordersteven ist dagegen nicht als Auftriebskörper ausgebildet und erzeugt daher im Wesentlichen keinen Auftrieb. So kann der Vordersteven z.B. aus massivem Material gebildet sein, z.B. aus einem Material, aus dem der übrige Rumpf gefertigt ist.

Der erfindungsgemäße Rumpf kann mit allen im Schiffsbau üblichen Materialien hergestellt werden, z.B. aus Kunststoffmaterialien, wie z.B. faserverstärktem Kunststoffen, oder aus Metall oder Holz. Der Rumpf kann auch gemischt aus verschiedenen Materialien hergestellt sein.

Der Auftriebskörper kann insbesondere derart ausgebildet sein, dass er in Richtung der Querachse des Rumpfs vom Rumpf zumindest in dem Bereich hervorsteht, in dem er am Rumpf angeordnet ist. Sofern der Auftriebskörper ganz oder teilweise vom schmalen Vordersteven gehalten wird, steht er von diesem in Richtung der Querachse des Rumpfs vor. Der Auftriebskörper erstreckt sich daher in Richtung der Querachse des Rumpfs um ein bestimmtes Maß, insbesondere in einem Bereich von 10 % bis 30 % der Rumpfbreite.

Als Rumpfquerschnitt bzw. Querschnitt des Rumpfs wird im Rahmen dieser Anmeldung eine Schnittebene durch den Rumpf senkrecht zur Längsachse verstanden. Der Schwerpunkt des Rumpfs, nachfolgend auch Schwergewichtspunkt genannt, kann sich insbesondere im Wesentlichen an derjenigen Längsposition des Rumpfs befinden, an der sich die vorgesehene Eintauchstelle des Bugs ins Wasser befindet, d.h. am Schnittpunkt der Projektionslinie (4) des Übergangs vom schwebenden Bug zum weiter hinten liegenden breiteren Rumpfbereich.

Die Heckansicht rechts oben in den Zeichnungen entspricht im Übrigen auch einer Querschnittsansicht eines Rumpfquerschnitts kurz hinter dem Kiel 7. Erkennbar ist in dieser Ansicht insbesondere die Wellenform des Rumpfs an dessen Unterseite, die optisch einer Trimaran-Form ähnelt. Im Unterschied zu einem Trimaran handelt es sich beim erfindungsgemäßen Rumpf aber um eine Einrumpfform. Je nach Ausgestaltung der Wellenform können die Wellenberge der Wellenform sich oberhalb oder unterhalb der Wasserlinie befinden. Die letztgenannte Alternative stellt einen weiteren Unterschied zu Trimaran-Konstruktionen dar.

Der Rumpf kann ferner eine sich unterhalb der Wasserlinie befindende Querachs-Stabilisationseinrichtung aufweisen, durch die der Rumpf bei Vorwärtsfahrt um seine Querachse stabilisiert werden kann. Hierdurch können unerwartete Wellengänge besser kompensiert werden. Zudem kann der jeweilige dynamische Auftrieb, der von dem Auftriebskörper erzeugt wird, an den entsprechenden Auftriebsbedarf im Bugbereich des Rumpfs angepasst werden. Die Querachs-Stabilisationseinrichtung kann eine statische Querachs-Stabilisationseinrichtung sein, d.h. ein unbewegliches Teil, z.B. in Form eines Hydrofoils 14. Insbesondere kann die Querachs-Stabilisationseinrichtung ähnlich einem Höhenleitwerk bei einem Flugzeug ausgebildet sein. Die Querachs-Stabilisationseinrichtung kann auch ganz oder teilweise beweglich sein, um eine variable Querachssteuerung (entsprechend einer Höhensteuerung beim Flugzeug) durchzuführen. Eine solche einstellbare Querachs-Stabilisationseinrichtung kann z.B. manuell von einem Benutzer des Wasserfahrzeuges gesteuert werden, oder durch automatische Steuerung oder Regelung. So kann z.B. eine mechanische oder elektronische Regelungseinrichtung in dem Wasserfahrzeug vorhanden sein, die die einstellbare Querachs-Stabilisationseinrichtung derart steuert oder regelt, dass ggf. auftretende Seegang-bedingte Rumpfbewegungen um die Querachse vollständig kompensiert werden oder zumindest deutlich verringert werden als ohne die Steuerung oder Regelung.

Die Erfindung betrifft außerdem ein Wasserfahrzeug mit wenigstens einem Rumpf der beschriebenen Art. Das Wasserfahrzeug kann ein Boot, eine Yacht oder jede andere Art von Schiff sein, insbesondere in Form eines Segel-Wasserfahrzeugs und/oder eines Motor-Wasserfahrzeugs.

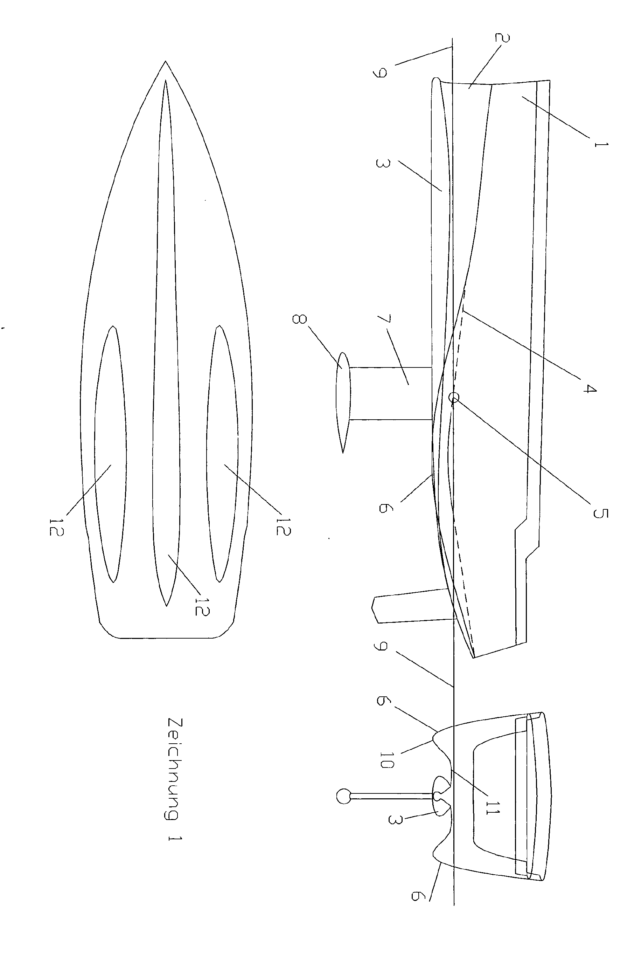

Nachfolgend wird anhand der Zeichnung 1 ein erstes Ausführungsbeispiel der Erfindung erläutert.

Die Zeichnung 1 zeigt die Rumpfform eines durch Motorkraft und/oder Wind betriebenen Wasserfahrzeuges, z.B. eine Motor- oder Segelbootrumpfform, Motor- oder Segelyachtrumpfform, Motor- oder Segelschiffrumpfform.

Dabei handelt es sich um eine Schiffskonstruktion eines Verdrängers.

Die Rumpfform vom Bug (vorne) bis zu dem Schwergewichtspunkt ist durch folgende Elemente geprägt: "der schwebende Bug" (1), "der Steven" (2) und "der Verdrängungskörper" (3) der sich unter der Wasserlinie (9) befindet. Der Steven verbindet den schwebenden Bug mit dem Verdrängungskörper. Schwebenden Bug ist breiter als Steven. Weitgehend gibt es Kiel (7) und Gewicht (8).

Der Rumpf vom Schwergewichtpunkt (5) bis zum Heck (hinten) hat einen gewöhnlichen Verlauf in der Seitenansicht (6) aber mit einer ausgeprägten waagerechten S-förmigen Kurve des Querschnitts in Richtung der Rumpfquerachse von innen nach außen (konkav (11), konvex (10)). Unter der Wasserlinie hat der Rumpf die Form eines Trimarans (12).

Es werden folgende Funktionen angestrebt:
- der schwebende Bug ist von der von vorne kommenden Welle nicht abhängig (er wird mit der Welle nicht angehoben)
- der Steven ist relativ zu den bekannten Konstruktionen extrem schmal, um das Wasser ohne großen Widerstand zu schneiden und die dadurch erzeugte minimale Bugwelle erst ab dem Schwergewichtspunkt direkt unter den breiten Rumpf zum Heck zu leiten.
- der Verdrängungskörper verleiht dem schwebenden Bug einen Auftrieb und befindet sich somit unter der Wasserlinie.
- der Verdrängungskörper ist torpedoförmig und in der Seitenansicht hat er zusätzlich die Form einer Tragfläche (Hydrofoil) für einen zusätzlichen dynamischen Auftrieb und eine senkrechte Stabilisierung.
- Die Bugwelle (oder der Wellengang) trifft den Rumpf direkt im Schwergewichtpunkt (5). An dieser Stelle befindet sich der Schnittpunkt der Projektionslinie (4) des Übergangs vom schwebenden Bug zum breiten Rumpf. Die Projektionslinie schneidet an dieser Stelle die Wasserlinie. Da die Welle den gesamten Rumpf an dieser Stelle im Schwergewichtpunkt trifft wird der gesamte Rumpf ohne Drehung um die Schiffsquerachse gleichmäßig (Bug und Heck auf einmal) angehoben.
- Die Bugwelle, die mit Luftblasen angereichert ist, wirkt positiv gegen die Turbulenzen, die wegen der Reibung des Wassers am Rumpf entstehen.
- Die konkave Form des Rumpfes im Querschnitt sorgt dafür dass die Luftblasen unter den Rumpf laufen und nicht zu den Seiten nach außen verdrängt werden.

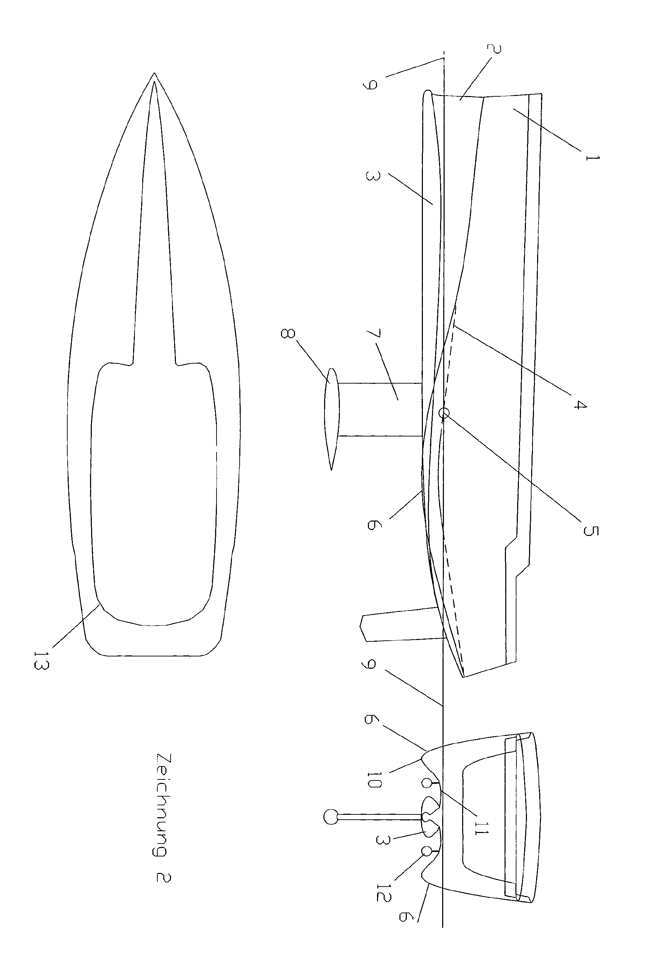

Nachfolgend wird anhand der Zeichnung 2 ein zweites Ausführungsbeispiel der Erfindung erläutert.

Die Zeichnung 2 zeigt die Einrumpfform eines durch Wind oder Motorkraft betriebenen Wasserfahrzeuges.

Dabei handelt es sich um eine Schiffskonstruktion eines Verdrängers.

Die Rumpfform vom Bug (vorne) bis zu dem Schwergewichtspunkt (5) ist durch folgende Elemente geprägt: "der Bug" (1), "der Verdrängungskörper"(3) und "der schmale Rumpf" (2) der den Bug mit dem Verdrängungskörper verbindet. Der Verdrängungskörper befindet sich unter der Wasserlinie (9). Bei den durch Wind betriebenen Wasserfahrzeugen werden Kiel (7) oder Hubkiel und Ballast (8) verwendet. Die Propeller (12) der Motoren sind entsprechend der Zeichnung positioniert. Die Wasserlinie (13) im Grundriss ist in der Zeichnung dargestellt.

Der Rumpf vom Schwergewichtpunkt (5) bis zum Heck (hinten) hat einen gewöhnlichen Verlauf in der Seitenansicht (6) aber mit einer ausgeprägten waagerechten Sförmigen Kurve des Querschnitts in Richtung der Rumpfquerachse von innen nach außen (konkav (11), konvex (10)).

Es werden folgende Funktionen angestrebt:
- der Bug (1) ist von der von vorne kommenden Welle nicht abhängig (er wird mit der Welle nicht angehoben)
- der schmale Rumpf (2) hat minimale Verdrängung und wird mit der Welle auch nicht angehoben. Die durch schmalen Rumpf erzeugte minimale Bugwelle wird erst ab dem Schwergewichtspunkt (5) direkt unter den breiten Rumpf zum Heck geleitet.
- der Verdrängungskörper (3) verleiht dem Bug (1) einen Auftrieb und befindet sich somit unter der Wasserlinie.
- der Verdrängungskörper ist torpedoförmig und in der Seitenansicht hat er zusätzlich die Form einer Tragfläche (Hydrofoil) für einen zusätzlichen dynamischen Auftrieb und eine senkrechte Stabilisierung.
- Die Bugwelle (oder der Wellengang) trifft den Rumpf im Schwergewichtpunkt (5) oder alternativ hinter ihm. An dieser Stelle befindet sich der Schnittpunkt der Projektionslinie (4) des Übergangs vom Bug zum breiten Rumpf. Die Projektionslinie schneidet an dieser Stelle die Wasserlinie. Da die Welle den gesamten Rumpf an dieser Stelle im Schwergewichtpunkt trifft wird der gesamte Rumpf ohne Drehung um die Schiffsquerachse gleichmäßig (Bug und Heck auf einmal) angehoben.
- Die Bugwelle, die mit Luftblasen angereichert ist, wirkt positiv gegen die Turbulenzen, die wegen der Reibung des Wassers am Rumpf entstehen.
- Die konkave Form des Rumpfes im Querschnitt sorgt dafür dass die Luftblasen unter den Rumpf laufen und nicht zu den Seiten nach außen verdrängt werden.

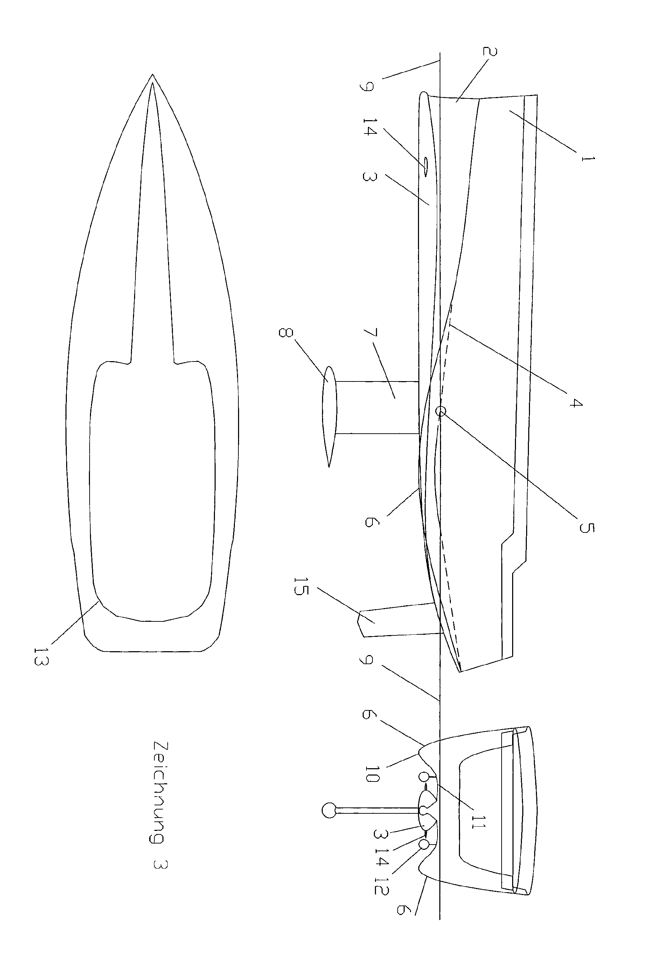

Nachfolgend wird anhand der Zeichnung 3 ein drittes Ausführungsbeispiel der Erfindung erläutert.

Die Zeichnung 3 zeigt die Einrumpfform eines durch Wind oder Motorkraft betriebenen Wasserfahrzeuges.

Dabei handelt es sich um eine Schiffskonstruktion eines Verdrängers.

Die Rumpfform vom Bug (vorne) bis zu dem Schwergewichtspunkt (5) ist durch folgende Elemente geprägt: "der Bug" (1), "der Verdrängungskörper"(3) und "der schmale Rumpf" (2) der den Bug mit dem Verdrängungskörper verbindet. Der Verdrängungskörper befindet sich unter der Wasserlinie (9). Bei den durch Wind betriebenen Wasserfahrzeugen werden Kiel (7) oder Hubkiel und Ballast (8), Ruder (15) verwendet. Die Propeller (12) der Motoren sind entsprechend der Zeichnung positioniert. Die Wasserlinie (13) im Grundriss ist in der Zeichnung dargestellt. Zur Stabilisierung der dynamischen Eigenschaften des Rumpfes sind die Hydrofoils (14) an dem Verdrängungskörper (3) vorgesehen.

Der Rumpf vom Schwergewichtpunkt (5) bis zum Heck (hinten) hat einen gewöhnlichen Verlauf einer Einrumpfform in der Seitenansicht (6) aber mit einer ausgeprägten waagerechten S-förmigen Kurve des Querschnitts in Richtung der Rumpfquerachse von innen nach außen (konkav (11), konvex (10)).

Es werden folgende Funktionen angestrebt:
- der Bug (1) ist von der von vorne kommenden Welle nicht abhängig (er wird mit der Welle nicht angehoben)
- der schmale Rumpf (2) hat minimale Verdrängung und wird mit der Welle auch nicht angehoben. Die durch schmalen Rumpf erzeugte minimale Bugwelle wird erst ab dem Schwergewichtspunkt (5) direkt unter den breiten Rumpf zum Heck geleitet.
- der Verdrängungskörper (3) verleiht dem Bug (1) einen Auftrieb und befindet sich somit unter der Wasserlinie.
- der Verdrängungskörper ist torpedoförmig und in der Seitenansicht hat er zusätzlich die Form einer Tragfläche (Hydrofoil) für einen zusätzlichen dynamischen Auftrieb und eine senkrechte Stabilisierung.
- Die Bugwelle (oder der Wellengang) trifft den Rumpf im Schwergewichtpunkt (5) oder alternativ hinter ihm. An dieser Stelle befindet sich der Schnittpunkt der Projektionslinie (4) des Übergangs vom Bug zum breiten Rumpf. Die Projektionslinie schneidet an dieser Stelle die Wasserlinie. Da die Welle den gesamten Rumpf an dieser Stelle im Schwergewichtpunkt trifft wird der gesamte Rumpf ohne Drehung um die Schiffsquerachse gleichmäßig (Bug und Heck auf einmal) angehoben.
- Die Bugwelle, die mit Luftblasen angereichert ist, wirkt positiv gegen die Turbulenzen, die wegen der Reibung des Wassers am Rumpf entstehen.
- Die konkave Form des Rumpfes im Querschnitt sorgt dafür dass die Luftblasen unter den Rumpf laufen und nicht zu den Seiten nach außen verdrängt werden.

## Patentansprüche

1. Die Rumpfform eines Wasserfahrzeuges,
**dadurch gekennzeichnet**
**dass** Rumpf am Bug visuell aus 3 Elementen besteht:
- aus dem Schwebenden Bug (1) (weil der Bug im verdrängten Zustand sich über der Wasserlinie befindet),
- aus dem extrem schmalen Steven (2) unter dem Schwebenden Bug,
- aus dem Verdrängungskörper (3), der sich unter der Wasserlinie befindet und dem Bug entsprechenden Auftrieb verleiht.

2. Die Rumpfform nach Anspruch 1, **dadurch gekennzeichnet dass** die untere Konturlinie (4) des Schwebenden Buges die Wasserlinie (9) in der Nähe des Schwergewichtpunktes (5) (entlang der Schiffslängsachse) schneidet dann weiter unter der Wasserlinie verläuft und sich am Heck wieder über der Wasserlinie im entsprechenden Abstand zur Wasseroberfläche befindet.

3. Die Rumpfform nach einem der vorhergehenden Ansprüche, **dadurch gekennzeichnet dass** der torpedoförmige Verdrängungskörper (3) in der Seitenprojektion die Form des Querschnitts einer Tragfläche (Hydrofoil) für den dynamischen Auftrieb bei der vorschreitenden Bewegung hat.

4. Die Rumpfform nach einem der vorhergehenden Ansprüche, **dadurch gekennzeichnet dass** die Form des Querschnittes an der Stelle wo die Wasserlinie den Rumpf schneidet, sich einem Trimaran (12) ähnelt (visuelle dreiteilige Aufteilung der Schwimmkörper).

5. Rumpf eines Wasserfahrzeugs, **gekennzeichnet durch** eines, mehrere oder alle der folgenden Merkmale:
a) der Rumpf weist einen unterhalb der Wasserlinie angeordneten Auftriebskörper auf, der sich zum vorderen Rumpfbereich bis hin in den Bug erstreckt, insbesondere bis zum Vordersteven,
b) der Auftriebskörper steht in Richtung der Querachse des Rumpfs vom Rumpf zumindest in dem Bereich hervor, in dem der Auftriebskörper am Rumpf angeordnet ist,
c) der Auftriebskörper erstreckt sich zum hinteren Rumpfbereich wenigstens bis hin zum Schwerpunkt des Rumpfs,
d) der Rumpf weist im Querschnitt, insbesondere in einem Querschnitt in Fahrtrichtung hinter dem Schwerpunkt des Rumpfs, an seiner Unterseite eine Wellenform mit wenigstens zwei seitlich am Rumpf angeordneten Wellentälern und wenigstens einem dazwischen angeordneten Wellenberg auf,
e) der Rumpf weist im Querschnitt, insbesondere in einem Querschnitt in Fahrtrichtung hinter dem Schwerpunkt des Rumpfs, an seiner Unterseite eine Wellenform mit wenigstens zwei seitlich am Rumpf angeordneten Wellentälern und wenigstens einem weiteren im Wesentlichen mittig in der Querschnittsansicht angeordnetem dritten Wellental und jeweils wenigstens einem links und rechts vom dritten Wellental angeordneten Wellenberg auf,
f) der Auftriebskörper erstreckt sich zum hinteren Rumpfbereich wenigstens bis in den Bereich des Rumpfs, in dem der Querschnitt des Rumpfs die Wellenform aufweist,
g) der Rumpfbug (1) erstreckt sich wenigstens im vorderen Drittel des Rumpfs, insbesondere bis zum Schwerpunkt (5) des Rumpfs, oberhalb der Wasserlinie,
h) ein extrem schmaler Vordersteven (2) verbindet den Bug (1) mit dem Auftriebskörper (3).

6. Rumpf nach Anspruch 5, **dadurch gekennzeichnet, dass** der Auftriebskörper zur Erzeugung statischen und/oder dynamischen Auftriebs ausgebildet ist.

7. Rumpf nach Anspruch 5 oder 6, **dadurch gekennzeichnet, dass** der Auftriebskörper eine größere Erstreckung in Längsrichtung des Rumpfs als in Querrichtung aufweist, insbesondere eine wenigstens fünfmal so große Erstreckung in Längsrichtung des Rumpfs wie in Querrichtung.

8. Rumpf nach einem der Ansprüche 5 bis 7, **dadurch gekennzeichnet, dass** sich die Wellenberge der Wellenform der Unterseite des Rumpfs unterhalb der Wasserlinie befinden.

9. Rumpf nach einem der Ansprüche 5 bis 8, **dadurch gekennzeichnet, dass** der Auftriebskörper als Verdrängungskörper ausgebildet ist.

10. Rumpf nach einem der Ansprüche 5 bis 9, **dadurch gekennzeichnet, dass** der Auftriebskörper ein bei Vorwärtsfahrt des Rumpfs durch das Wasser auftriebserzeugendes Profil aufweist.

11. Rumpf nach einem der Ansprüche 5 bis 10, **dadurch gekennzeichnet, dass** am Rumpf eine sich unterhalb der Wasserlinie befindende Querachs-Stabilisationseinrichtung angeordnet ist, durch die der Rumpf zumindest bei in der vorgesehenen Vorwärtsfahrtrichtung des Rumpfs durch das Wasser fahrendem Rumpf um seine Querachse stabilisierbar ist.

12. Rumpf nach einem der Ansprüche 5 bis 11, **dadurch gekennzeichnet, dass** der Rumpf eine Rumpfform nach einem der Ansprüche 1 bis 4 aufweist.

13. Wasserfahrzeug mit wenigstens einem Rumpf nach einem der Ansprüche 5 bis 12.
